# EUROPÄISCHE PATENTSCHRIFT

(11) **EP 3 616 771 B1**
(45) Veröffentlichungstag und Bekanntmachung des Hinweises auf die Patenterteilung: **05.10.2022**
(21) Anmeldenummer: 19192987.6
(22) Anmeldetag: 22.08.2019
(51) Int. Cl.: B01D 46/00, B60T 17/00, F04D 25/00

(54) **DRUCKLUFTMODUL FÜR EIN NUTZFAHRZEUG UND VERFAHREN ZU DESSEN PRÜFUNG**
COMPRESSED AIR MODULE FOR A COMMERCIAL VEHICLE AND METHOD FOR TESTING SAME
MODULE À AIR COMPRIMÉ POUR UN VÉHICULE UTILITAIRE ET SON PROCÉDÉ D'ESSAI

(30) Priorität: 30.08.2018 DE 102018121215
(43) Veröffentlichungstag der Anmeldung: 04.03.2020
(73) Patentinhaber: MAN Truck & Bus SE, 80995 München (DE)
(72) Erfinder: Kondic, Darko, 85757 Karlsfeld (DE); Kusch, Willi, 88239 Wangen im Allgäu (DE); Petrov, Anton, 85276 Pfaffenhofen (DE); Burger, Norbert, 84030 Ergolding (DE)
(74) Vertreter: v. Bezold & Partner Patentanwälte - PartG mbB

(56) Entgegenhaltungen:
- EP-A1- 1 267 079
- EP-A1- 1 632 413
- EP-A2- 1 031 730
- WO-A1-95/29831
- DE-A1- 3 514 989
- DE-A1-102012 005 308
- FR-A1- 2 283 805

## Beschreibung

Die Erfindung betrifft ein Druckluftmodul zur Montage an einen Rahmen eines Nutzfahrzeugs und ein Verfahren zur Funktionsprüfung des Druckluftmoduls.

Die US 2007/0234904 A1 offenbart ein Trockendruckluftmodul zur Befestigung am Rahmen eines Nutzfahrzeuges. Das Trockendruckluftmodul besteht aus einem Gehäuse, einem Luftkompressor, einem Lufttrockner und einem Reservoir. Der Luftkompressor, der Lufttrockner und das Reservoir sind in einem Gehäuse angeordnet und können gemeinsam mit dem Gehäuse am Rahmen befestigt werden. Der Lufttrockner wird mit Druckluft aus dem Luftkompressor und das Reservoir mit trockener Druckluft aus dem Lufttrockner versorgt. Der Behälter ist in der Lage, die trockene Druckluft zu speichern und dem Nutzfahrzeug zuzuführen.

Die DE 10 2012 005308 A1 offenbart eine Druckluftversorgungsanlage zum Betreiben einer Luftfederanlage eines PKWs, aufweisend eine Lufttrockneranordnung, einen Luftverdichter, einen Motor, eine Ventilanordnung zur Steuerung einer Druckluftströmung und ein Gehäuse.

Der Erfindung liegt die Aufgabe zu Grunde, ein alternatives und/oder verbessertes Druckluftmodul zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Die Erfindung schafft ein Druckluftmodul zur Montage an einen Rahmen eines Nutzfahrzeugs. Das Druckluftmodul weist einen Luftkompressor zum Verdichten von Luft, einen Druckluftspeicher zum Speichern von Druckluft und eine Druckluftaufbereitung zum Reinigen, Entfeuchten und/oder Kühlen von Druckluft auf. Das Druckluftmodul weist mindestens eine Druckluft-Bremsventileinheit auf, die vorzugsweise einem Druckluft-Bremssystem vorzugsweise des Nutzfahrzeugs zugeordnet ist. Das Druckluftmodul weist eine Haltevorrichtung, die zur Montage an den Rahmen ausgebildet ist und den Luftkompressor, den Druckluftspeicher, die Druckluftaufbereitung und/oder die mindestens eine Druckluft-Bremsventileinheit (z. B. direkt) trägt.

Das Druckluftmodul bietet den Vorteil, dass alle für eine Bremsfunktion notwendigen Komponenten (bis auf die Bremszylinder an den jeweiligen Achsen) in einem Modul integriert sind. Das Druckluftmodul kann vormontiert und auf Funktionsfähigkeit geprüft werden. Zweckmäßig kann das Druckluftmodul bei externer Energieversorgung eigenständig prüffähig vormontiert sein. Nach erfolgreicher Funktionsprüfung kann das Druckluftmodul an den Rahmen des Nutzfahrzeugs montiert werden. Das Druckluftmodul kann ferner modular erweiterbar sein, um fahrzeugspezifisch weitere Druckluftkomponenten zur Realisierung weiterer pneumatischer Funktionen des Nutzfahrzeugs aufzunehmen.

Das Druckluftmodul kann besonders zweckmäßig bei einer Fahrzeugmontage eines voll- oder teilelektrifizierten Nutzfahrzeugs (z. B. Elektro-Nutzfahrzeug oder Hybrid-Nutzfahrzeug) verwendet werden. Bei einem solchen Nutzfahrzeug könnte prinzipiell die Anordnung und der Verbau der Komponenten zur Drucklufterzeugung und Aufbereitung und deren funktionale Verbindungen nach freien Bauräumen angeordnet sein. Beachtet man jedoch die mögliche Vorrangigkeit der Sicherheitsanforderungen bei der Platzierung und Leitungsführung von Hochvoltkomponenten bei Kraftfahrzeugen mit Elektroantrieb, können die freien Bauräume für die Druckluftkomponenten sehr eingeschränkt sein. Hier kann das kompakte Druckluftmodul gemäß der vorliegenden Offenbarung mit seiner Vielzahl von mechanischen, elektrischen und pneumatischen Druckluftkomponenten besonders vorteilhaft sein.

Weitere Vorteile ergeben sich insbesondere durch den stark reduzierter Aufwand für die Montagedokumentation und Komplexität beim Fahrzeugeinbau, geringere Dokumentationsänderungen bei technischen Änderungen und eine Konzentration des Know-Hows für den Zusammenbau und die Qualitätsprüfung. Zusätzlich finden keine aufwendigen nachträglichen Montageoperationen in einer verbauten Fahrzeugstruktur statt und es besteht eine optimale Erreichbarkeit im Servicefall.

Zweckmäßig kann die Druckluftaufbereitung in pneumatischer Fluidverbindung stromabwärts von dem Luftkompressor angeordnet sein. Es ist möglich, dass der Druckluftspeicher in pneumatischer Fluidverbindung stromabwärts von der Druckluftaufbereitung angeordnet ist. Es ist auch möglich, dass die mindestens eine Druckluft-Bremsventileinheit in pneumatischer Fluidverbindung stromabwärts von dem Druckluftspeicher angeordnet ist.

In einem Ausführungsbeispiel weist die mindestens eine Druckluft-Bremsventileinheit ein Druckluft-Betriebsbremsventileinheit auf, die vorzugsweise einem elektronisch geregelten Druckluft-Betriebsbremssystem (z. B. umfassend ein Antiblockiersystem und/oder ein Antriebsschlupfregelungssystem) vorzugsweise des Nutzfahrzeugs zugeordnet ist. Alternativ oder zusätzlich weist die mindestens eine Druckluft-Bremsventileinheit eine Druckluft-Feststellbremsventileinheit auf, die vorzugsweise einem elektrischen Druckluft-Feststellbremssystem vorzugsweise des Nutzfahrzeugs zugeordnet ist.

In einer Weiterbildung ist die Druckluft-Betriebsbremsventileinheit dazu ausgebildet, Bremsdrücke einer Vorderachse des Nutzfahrzeugs und/oder einer Hinterachse des Nutzfahrzeugs zu steuern.

In einem weiteren Ausführungsbeispiel weist die Druckluft-Betriebsbremsventileinheit ein Proportionalventil, das vorzugsweise einer Vorderachse des Nutzfahrzeugs zugeordnet ist, und/oder einen Hinterachsmodulator, der vorzugsweise einer Hinterachse des Nutzfahrzeugs zugeordnet ist, auf.

In einem weiteren Ausführungsbeispiel ist die Druckluft-Feststellbremsventileinheit dazu ausgebildet, eine Feststellbremse an einer Achse des Nutzfahrzeugs zu steuern.

In einer Ausführungsform weist das Druckluftmodul eine Druckluft-Luftfederungsventileinheit auf, die vorzugsweise einem elektronisch geregelten Luftfederungssystem vorzugsweise des Nutzfahrzeugs zugeordnet und an der Haltevorrichtung getragen ist. Damit kann ein Funktionsumfang des Druckluftmoduls auf die Steuerung eines Luftfederungssystems erweitert werden.

In einer Weiterbildung ist die Druckluft-Luftfederungsventileinheit dazu ausgebildet, einen Druck in einem elektronisch geregelten Luftfederungssystem aufzubauen, zu halten und/oder zu senken.

Alternativ oder zusätzlich weist die Druckluft-Luftfederungsventileinheit ein Vorderachsventil für eine luftgefederte Vorderachse des Nutzfahrzeugs, ein Hinterachsventil für eine luftgefederte Hinterachse des Nutzfahrzeugs und/oder ein Hinterachs-Liftachsventil für eine luftgefederte Lifthinterachse des Nutzfahrzeugs auf.

In einer weiteren Ausführungsform weist die Druckluftvorrichtung ferner eine Regenerationsvorrichtung zum Regenerieren der Druckluftaufbereitung auf. Die Regenerationsvorrichtung ist zumindest teilweise an der Haltevorrichtung getragen.

Zweckmäßig kann die Regenerationsvorrichtung in pneumatischer Fluidverbindung mit der Druckluftaufbereitung angeordnet sein.

In einer Weiterbildung ist die Haltevorrichtung zumindest abschnittsweise als ein abgedichtetes Hohlprofil ausgebildet und ein Druckluft-Regenerationsbehälter der Regenerationsvorrichtung durch das abgedichtete Hohlprofil gebildet.

Zweckmäßig kann das Druckluftmodul mindestens eine weitere Druckluft-Ventileinheit (z. B. Druckluft-Druckreglerventileinheit) aufweisen, die vorzugsweise als eine Magnetventileinheit ausgeführt und/oder an der Haltevorrichtung getragen ist.

In einer Ausführungsvariante ist das Druckluftmodul zum Ermöglichen einer eigenständigen (z. B. elektrischen und/oder pneumatischen) Funktionsprüfung vormontiert. Beispielsweise können der Luftkompressor, der Druckluftspeicher, die Druckluftaufbereitung und die mindestens eine Druckluft-Bremsventileinheit zum Ermöglichen einer eigenständigen (z. B. elektrischen und/oder pneumatischen) Funktionsprüfung im Druckluftmodul vormontiert sein.

Zweckmäßig kann zusätzlich auch die Druckluft-Luftfederungs-Ventileinheit und/oder die Regenerationsvorrichtung zum Ermöglichen einer eigenständigen (z. B. elektrischen und/oder pneumatischen) Funktionsprüfung im Druckluftmodul vormontiert sein.

In einer weiteren Ausführungsvariante ist das Druckluftmodul eigenständig prüffähig elektrisch verkabelt. Beispielsweise ist oder sind der Luftkompressor, die Druckluftaufbereitung, die Druckluft-Luftfederungs-Ventileinheit, die Regenerationsvorrichtung und/oder die mindestens eine Druckluft-Bremsventileinheit eigenständig prüffähig in dem Druckluftmodul elektrisch verkabelt.

In einer weiteren Ausführungsvariante weist das Druckluftmodul mindestens eine elektrische oder elektronische Schnittstelle zur eigenständigen Prüfung der elektrischen und/oder elektronischen Funktionsfähigkeit des Druckluftmoduls auf. Alternativ oder zusätzlich weist das Druckluftmodul mindestens eine elektrische oder elektronische Schnittstelle zur eigenständigen Prüfung der elektrischen und/oder elektronischen Funktionsfähigkeit des Luftkompressors, der Druckluftaufbereitung, der Druckluft-Luftfederungs-Ventileinheit, der Regenerationsvorrichtung und/oder der mindestens einen Druckluft-Bremsventileinheit auf.

In einem weiteren Ausführungsbeispiel ist das Druckluftmodul eigenständig prüffähig pneumatisch verrohrt. Beispielsweise ist oder sind der Luftkompressor, der Druckluftspeicher, die Druckluftaufbereitung, die Druckluft-Luftfederungs-Ventileinheit, die Regenerationsvorrichtung und/oder die mindestens ein Druckluft-Bremsventileinheit eigenständig prüffähig in dem Druckluftmodul pneumatisch verrohrt.

In einem weiteren Ausführungsbeispiel weist das Druckluftmodul mindestens eine pneumatische Schnittstelle (z. B. Prüf- und/oder Befüllanschluss) zur eigenständigen Prüfung der pneumatischen Funktionsfähigkeit des Druckluftmoduls auf. Alternativ oder zusätzlich weist das Druckluftmodul mindestens eine pneumatische Schnittstelle zur eigenständigen Prüfung der pneumatischen Funktionsfähigkeit des Luftkompressors, der Druckluftaufbereitung, der Druckluft-Luftfederungs-Ventileinheit, der Regenerationsvorrichtung und/oder der mindestens einen Druckluft-Bremsventileinheit auf.

Zweckmäßig kann die mindestens eine pneumatische Schnittstelle in Fluidverbindung stromabwärts des Luftkompressors, der Druckluftaufbereitung, der Druckluft-Luftfederungs-Ventileinheit, der Regenerationsvorrichtung und/oder der mindestens einen Druckluft-Bremsventileinheit angeordnet sein.

Zweckmäßig kann die Haltevorrichtung eine Mehrzahl von vorbestimmten Anbringungsbereichen aufweisen, die zum wahlweisen modularen Aufnehmen oder Weglassen von Druckluftkomponenten umfassend den Luftkompressor, den Druckluftspeicher, die Druckluftaufbereitung und die mindestens eine Druckluft-Bremsventileinheit ausgebildet sind.

In einer weiteren Ausführungsform ist das Druckluftmodul dazu ausgebildet, wahlweise modular mindestens eine weitere Druckluftkomponente, vorzugsweise mehrere weitere Druckluftkomponenten, aufzunehmen. Alternativ oder zusätzlich weist das Druckluftmodul eine modular um weitere Druckluftkomponenten erweiterbare Basisausführung auf.

In einer weiteren Ausführungsform weist die Haltevorrichtung mindestens einen (weiteren) vorbestimmten Anbringungsbereich auf, der zur wahlweisen Aufnahme mindestens einer weiteren Druckluftkomponente zur modularen Erweiterung des Druckluftmoduls ausgebildet ist.

In einer Weiterbildung weist die mindestens eine weitere Druckluftkomponente eine Druckluft-Anhängerbremssteuerventileinheit und/oder einen weiteren Druckluftspeicher, die oder der vorzugsweise einem Druckluft-Anhängerbremssystem (z. B. Betriebsbremse und/oder Feststellbremse) zugeordnet ist oder sind, auf. Alternativ oder zusätzlich weist die mindestens eine weitere Druckluftkomponente eine Druckluft-Bremsventileinheit und/oder einen weiteren Druckluftspeicher, die oder der vorzugsweise einer Vor- oder Nachlaufachse des Nutzfahrzeugs zugeordnet ist, auf.

Zweckmäßig kann das Druckluftmodul ferner eine Druckluft-Anhängerbremssteuerventileinheit und/oder einen weiteren Druckluftspeicher, die oder der vorzugsweise einem Druckluft-Anhängerbremssystem (z. B. Betriebsbremse und/oder Feststellbremse) zugeordnet ist, aufweisen. Alternativ oder zusätzlich kann das Druckluftmodul eine Druckluft-Bremsventileinheit und/oder einen weiteren Druckluftspeicher, die oder der vorzugsweise einer Vor- oder Nachlaufachse des Nutzfahrzeugs zugeordnet ist, aufweisen.

In einem Ausführungsbeispiel ist die Haltevorrichtung als ein offenes Gestell ausgeführt. Somit können auf besonders einfache Weise einzelne Druckluftkomponenten modular an der Haltevorrichtung ergänzt werden.

In einem weiteren Ausführungsbeispiel ist der Druckluftspeicher außen an der Haltevorrichtung angebracht. In einer Weiterbildung ist der Druckluftspeicher außen an der Haltevorrichtung an einer Seite der Haltevorrichtung, die zur Montage an den Rahmen ausgebildet ist; angebracht. Dies kann insbesondere aus Bauraumgründen vorteilhaft sein.

In einem weiteren Ausführungsbeispiel ist der Luftkompressor, die Druckluftaufbereitung und/oder die Druckluft-Betriebsbremsventileinheit innen an der Haltevorrichtung angebracht.

In einer Ausführungsform ist die Druckluft-Luftfederungsventileinheit und/oder die Druckluft-Feststellbremsventileinheit außen an der Haltevorrichtung und/oder oberhalb des Luftkompressors angebracht.

In einer weiteren Ausführungsform ist der Luftkompressor elektrisch angetrieben, vorzugsweise extern des Druckluftmoduls von einer Batterie des Nutzfahrzeugs.

In einer weiteren Ausführungsform ist die mindestens eine Druckluft-Bremsventileinheit und/oder die Druckluft-Luftfederungsventileinheit elektrisch betätigt und/oder als Magnetventileinheit ausgebildet.

In einer Ausführungsform weist die Druckluftaufbereitung einen Partikelfilter, einen Luftkühler und/oder einen Luftentfeuchter auf.

Die Erfindung betrifft auch ein Nutzfahrzeug, vorzugsweise einen Lastkraftwagen oder einen Omnibus, mit einem Druckluftmodul wie hierin offenbart, vorzugsweise rahmenfest am Rahmen des Nutzfahrzeugs montiert, vorzugsweise benachbart zu einer Hinterachse des Nutzfahrzeugs.

Die Erfindung betrifft auch ein Verfahren zur Funktionsprüfung eines Druckluftmoduls wie hierin offenbart. Das Verfahren weist ein Vormontieren des Druckluftmoduls zu einer eigenständig, vorzugsweise elektrisch oder pneumatisch, prüfbaren Einheit auf. Das Verfahren weist ein funktionales, vorzugsweise elektrisches oder pneumatisches, Prüfen des vormontierten Druckluftmoduls vor der Montage an den Rahmen des Nutzfahrzeugs auf.

Zweckmäßig kann das Vormontieren des Druckluftmoduls ein Anbringen des Luftkompressors, des Druckluftspeichers, der Druckluftaufbereitung, der mindestens einen Druckluft-Bremsventileinheit, der Druckluft-Luftfederungsventileinheit und/oder der Regenerationsvorrichtung an der Haltevorrichtung aufweisen.

Es ist möglich, dass das Vormontieren des Druckluftmoduls ein elektrisches Verkabeln und/oder ein pneumatisches Verrohren des Druckluftmoduls aufweist.

Es ist auch möglich, dass das Vormontieren des Druckluftmoduls ein elektrisches Verkabeln und/oder ein pneumatisches Verrohren des Luftkompressors, des Druckluftspeichers, der Druckluftaufbereitung, der mindestens einen Druckluft-Bremsventileinheit, der Druckluft-Luftfederungsventileinheit und/oder der Regenerationsvorrichtung aufweist.

Das Verfahren kann ferner ein Montieren des Druckluftmoduls am Rahmen des Nutzfahrzeugs nach positiver Funktionsprüfung aufweisen.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Ansicht eines Nutzfahrzeugs gemäß der vorliegenden Offenbarung;
- Figur 2: eine perspektivische Ansicht eines beispielhaften Druckluftmoduls gemäß der vorliegenden Offenbarung;
- Figur 3: eine weitere perspektivische Ansicht des beispielhaften Druckluftmoduls gemäß der vorliegenden Offenbarung; und
- Figur 4: eine Draufsicht auf das beispielhafte Druckluftmodul gemäß der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

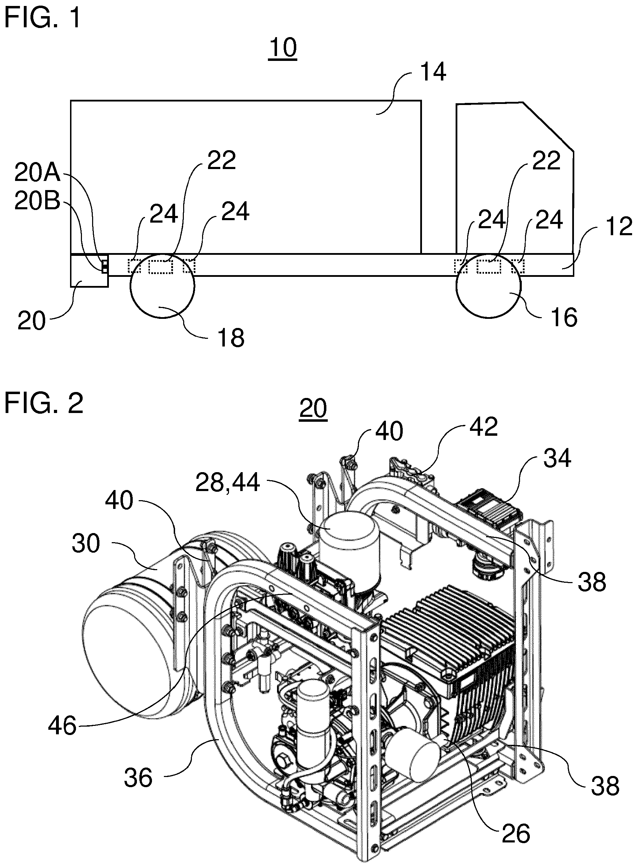

Die Figur 1 zeigt rein schematisch ein Nutzfahrzeug 10. Beispielhaft ist das Nutzfahrzeug 10 als ein Lastkraftwagen mit einem Aufbau 14 ausgebildet. Es ist allerdings auch möglich, dass das Nutzfahrzeug 10 beispielsweise als ein Omnibus ausgebildet ist. Das Nutzfahrzeug 10 kann auch in einem Nutzfahrzeuggespann umfasst sein, zum Beispiel in einem Sattelzug mit Sattelzugfahrzeug und Sattelauflieger oder in einem Hängerzug mit Hängerzugfahrzeug und Anhänger. Das Nutzfahrzeug 10 kann beispielsweise voll- oder teilelektrifiziert sein. Das beispielhafte Nutzfahrzeug 10 weist einen Rahmen 12, zum Beispiel einen Leiterrahmen, den auf dem Rahmen 12 angebrachten Aufbau 14, eine Vorderachse 16 und eine Hinterachse 18 auf.

Das Nutzfahrzeug 10 weist ein Druckluftmodul 20 auf. Das Druckluftmodul 20 ist an dem Rahmen 12 befestigt. Beispielsweise ist das Druckluftmodul 20 hinter der Hinterachse 18 außen am Rahmen 12 befestigt, zum Beispiel um die Leitungslängen möglichst gering zu halten. Das Druckluftmodul 20 dient vorzugsweise zur mechanischen und funktionalen Zusammenfassung aller für eine Bremsfunktion des Nutzfahrzeugs 10 notwendigen Komponenten. Das Druckluftmodul 20 kann weitere Druckluftkomponenten aufweisen, zum Beispiel für ein Luftfederungssystem des Nutzfahrzeugs 10 oder für ein Druckluft-Bremssystem eines Anhängers des Nutzfahrzeugs 10. Vorzugsweise sind die weiteren Druckluftkomponenten wahlweise modular in den Druckluftmodul 20 integrierbar, und zwar jeweils fahrzeugspezifisch bezüglich des jeweiligen Nutzfahrzeugs 10.

Das Druckluftmodul 20 weist eine oder mehrere, vorzugsweise standardisierte, elektrische und/oder elektronische Schnittstellen 20A auf. Über die Schnittstelle 20A können bspw. Steuerungssignale für Komponenten des Druckluftmoduls 20 empfangen werden. Über die Schnittstelle 20A kann auch eine elektrische Energieversorgung für Komponenten des Druckluftmoduls 20 erfolgen.

Das Druckluftmodul 20 weist eine oder mehrere, vorzugsweise standardisierte, pneumatische Schnittstellen 20B zur Abgabe von Druckluft auf. Vorzugsweise kann für jedes in dem Druckluftmodul 20 zumindest teilweise integrierte System (z. B. Druckluft-Bremssystem, Luftfederungssystem, Anhänger-Bremssystem usw.) eine eigene pneumatische Schnittstelle 20B zur Abgabe von für das jeweilige System spezifisch geregelter Druckluft (z. B. bezüglich Menge und/oder Druckniveau) umfasst sein.

Das Nutzfahrzeug 10 weist ferner ein Druckluft-Bremssystem 22 für eine elektronisch geregelte Betriebsbremse und eine elektrische Feststellbremse auf. Die elektronisch geregelte Betriebsbremse kann bspw. ein Antiblockiersystem und/oder ein Antriebsschlupfregelungssystem aufweisen. Das Druckluft-Bremssystem 22 weist Bremszylinder, z. B. für jede Achse 16 und 18, auf, wie in Figur 1 dargestellt. Das Druckluft-Bremssystem 22 ist zudem teilweise in dem Druckluftmodul 20 integriert, und zwar in Form einer Druckluft-Betriebsbremsventileinheit und einer Druckluft-Feststellbremsventileinheit, wie unter Bezugnahme auf die Figuren 2 bis 4 näher erläutert ist. In Fluidverbindung stromabwärts der Betriebsbremsventileinheit und der Feststellbremsventileinheit kann jeweils eine eigene pneumatische Schnittstelle 20B angeordnet sein.

Das Nutzfahrzeug 10 kann ferner ein elektronisch geregeltes Luftfederungssystem 24 aufweisen. Das Luftfederungssystem 24 kann Luftfederbälge z. B. für eine oder mehrere der Achsen 16 und 18 aufweisen, wie in Figur 1 dargestellt ist. Das Luftfederungssystem 24 kann zudem teilweise in dem Druckluftmodul 20 integriert sein, und zwar in Form einer Druckluft-Luftfederungsventileinheit, wie unter Bezugnahme auf die Figuren 2 bis 4 näher erläutert ist. Stromabwärts der Druckluft-Luftfederungsventileinheit kann eine eigene pneumatische Schnittstelle 20B angeordnet sein.

Die Figuren 2 bis 4 zeigen eine beispielhafte Ausführungsvariante des Druckluftmoduls 20, das nachfolgend unter Einbeziehung von Figur 1 beschrieben ist. Aus Übersichtsgründen sind in den Figuren 2 bis 4 eine elektrische Verkabelung und eine pneumatische Verrohrung innerhalb des Druckluftmoduls 20 nicht dargestellt.

Das Druckluftmodul 20 weist einen Luftkompressor 26, eine Druckluftaufbereitung 28, einen Druckluftspeicher 30, eine Druckluft-Betriebsbremsventileinheit 32, eine Druckluft-Feststellbremsventileinheit 34 und eine Haltevorrichtung 36 auf.

Der Luftkompressor (auch Luftpresser genannt) 26 ist zum Verdichten von Umgebungsluft zu Druckluft, zum Beispiel auf ein Druckniveau zwischen 8 bar und 12 bar, ausgebildet. Der Luftkompressor 26 Ist vorzugsweise elektrisch angetrieben. Eine elektrische Energieversorgung des Luftkompressors 26 kann außerhalb des Druckluftmoduls 20 angeordnet sein, zum Beispiel in Form einer Fahrzeugbatterie oder Traktionsbatterie des Nutzfahrzeugs 10.

Die Druckluftaufbereitung 28 ist zum Aufbereiten der Druckluft für die nachgeschalteten Druckluftsysteme ausgebildet. Vorzugsweise kann die Druckluftaufbereitung 28 einen Partikelfilter zum Entfernen von Schmutz aus der Druckluft, einen Luftkühler zum Kühlen der Druckluft und/oder einen Luftentfeuchter zum Entfeuchten der Druckluft aufweisen. Die Druckluftaufbereitung 28 ist stromabwärts des Luftkompressors 26 angeordnet. Es ist möglich, dass in Fluidverbindung zwischen dem Luftkompressor 26 und der Druckluftaufbereitung 28 bspw. eine Druckluft-Druckreglerventileinheit angeordnet und im Druckluftmodul 20 umfasst ist.

Im Druckluftspeicher 30 kann die von der Druckluftaufbereitung 28 aufbereitete Druckluft gespeichert werden. Die Druckluftaufbereitung 28 ist stromabwärts des Luftkompressors 26 und der Druckluftaufbereitung 28 angeordnet.

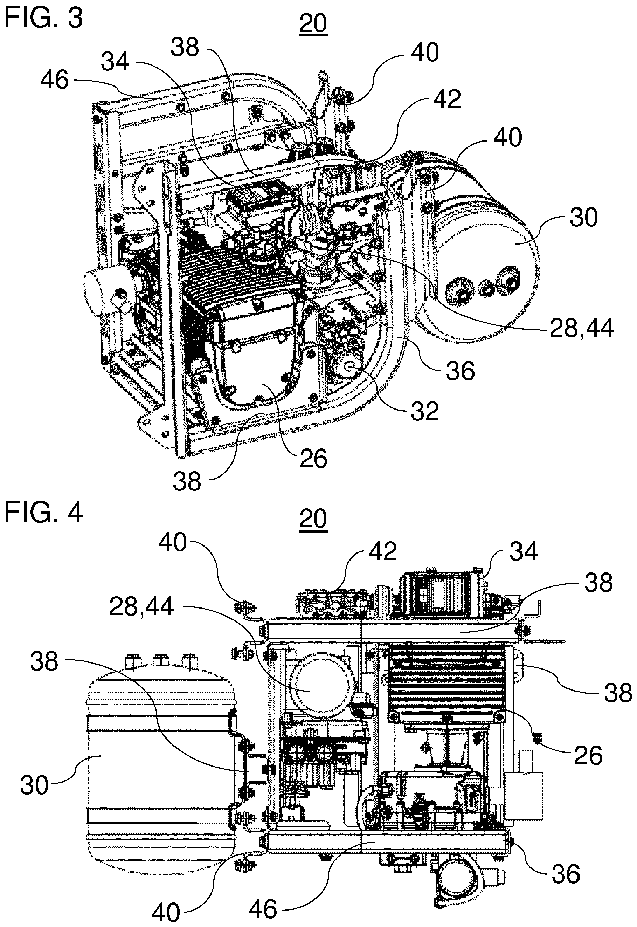

Die Druckluft-Betriebsbremsventileinheit 32 (siehe Figur 3) ist Teil des Druckluft-Bremssystems 22 des Nutzfahrzeugs 10. Die Druckluft-Betriebsbremsventileinheit 32 ist dazu ausgebildet, Bremsdrücke der Vorderachse 16 und der Hinterachse 18 zu steuern. Insbesondere kann die Druckluft-Betriebsbremsventileinheit 32 Bremszylinder des Druckluft-Bremssystems 22 mit Druckluft versorgen. Beispielsweise kann die Druckluft-Betriebsbremsventileinheit 32 ein Proportionalventil aufweisen, das in Fluidverbindung stromaufwärts des Bremszylinders in der Vorderachse 16 angeordnet ist. Beispielsweise kann die Druckluft-Betriebsbremsventileinheit 32 einen Hinterachsmodulator aufweisen, der in Fluidverbindung stromaufwärts des Bremszylinders der Hinterachse 18 angeordnet ist. Die Druckluft-Betriebsbremsventileinheit 32 kann als eine elektrisch betätigte Magnetventileinheit mit einem oder mehreren Ventilen ausgebildet sein.

Die Druckluft-Feststellbremsventileinheit 34 ist Teil des Druckluft-Bremssystems 22 des Nutzfahrzeugs 10. Die Druckluft-Feststellbremsventileinheit 34 kann bspw. mit Bremszylindern einer Feststellbremse an der Hinterachse 18 in Fluidverbindung stehen.

Die Haltevorrichtung 36 trägt den Luftkompressor 26, die Druckluftaufbereitung 28, den Druckluftspeicher 30 und die Druckluft-Betriebsbremsventileinheit 32. Im Einzelnen sind der Luftkompressor 26, die Druckluftaufbereitung 28, der Druckluftspeicher 30 und die Druckluft-Betriebsbremsventileinheit 32 an speziell dafür vorgesehenen, vorbestimmten Anbringungsbereichen 38 der Haltevorrichtung 36 lösbar angebracht, zum Beispiel mittels Befestigungsschrauben.

Die Haltevorrichtung 36 ist als ein offenes Gestell ausgeführt. Das offene Gestell ist aus Querträgern, Längsträgern und Vertikalträgern aufgebaut, die eine Außenkontur des offenen Gestells bilden. Die Haltevorrichtung 36 ist über bspw. zwei beabstandete Halterungen 40 an dem Rahmen 12 des Nutzfahrzeugs 10 befestigbar, z. B. mittels lösbarer Schrauben.

Das Druckluftmodul 20 kann auch eine Druckluft-Luftfederungsventileinheit 42 aufweisen. Die Druckluft-Luftfederungsventileinheit 42 kann Teil des Luftfederungssystems 24 des Nutzfahrzeugs 10 sein. Die Druckluft-Luftfederungsventileinheit 42 ist ebenfalls an einem vorbestimmten Anbringungsbereich 38 an der Haltevorrichtung getragen.

Die Druckluft-Luftfederungsventileinheit 42 ist dazu ausgebildet, einen Druck in dem Luftfederungssystem 20 aufzubauen, zu halten und/oder zu senken. So kann ein Bodenabstand des Nutzfahrzeugs 10 an einer oder mehreren Achsen 16, 18 des Nutzfahrzeugs 10 vergrößert, gehalten oder verringert werden. Bspw. kann die Druckluft-Luftfederungsventileinheit 42 ein Vorderachsventil in Fluidverbindung mit Luftfederbälgen der luftgefederten Vorderachse 16, ein Hinterachsventil in Fluidverbindung mit Luftfederbälgen der luftgefederte Hinterachse 18 und/oder ein Hinterachs-Liftachsventil in Fluidverbindung mit Luftfederbälgen einer luftgefederte Hinterachse und Hubzylindern einer Liftachse des Nutzfahrzeugs aufweisen.

Das Druckluftmodul 20 kann ferner eine Regenerationsvorrichtung 44 zum Regenerieren der Druckluftaufbereitung 28 aufweisen. Die Regenerationsvorrichtung 44 kann zumindest teilweise an der Haltevorrichtung 36 getragen sein. Es ist auch möglich, dass bspw. ein Druckluft-Regenerationsbehälter der Regenerationsvorrichtung 44 durch ein abgedichtetes Hohlprofil der Haltevorrichtung 36 gebildet ist.

Die Druckluft-Betriebsbremsventileinheit 32, die Druckluft-Feststellbremsventileinheit 34 und/oder Druckluft-Luftfederungsventileinheit 42 kann als eine elektrisch betätigte Magnetventileinheit mit einem oder mehreren Ventilen ausgebildet sein.

Eine besonders bauraumgünstige Anordnung, die insbesondere hinsichtlich der notwendigen elektrischen Verkabelung und der pneumatischen Verrohrung des Druckluftmoduls 20 vorteilhaft sein kann, ergibt sich bei nachfolgender Komponentenanordnung. Der Druckluftspeicher 30 kann außen an der Haltevorrichtung 36 angebracht werden, vorzugsweisen an einer Seite der Haltevorrichtung 36, an der auch die Halterungen 40 angeordnet sind. Der Luftkompressor 26, die Druckluftaufbereitung 28 und/oder die Druckluft-Betriebsbremsventileinheit 32 können geschützt innerhalb der Außenkonturen der Haltevorrichtung 36 angebracht sein. Die Druckluft-Luftfederungsventileinheit 42 und/oder die Druckluft-Feststellbremsventileinheit 34 können außen an der Haltevorrichtung 36 und/oder oberhalb des Luftkompressors 26 angebracht sein. Andere Anordnungen der Komponenten sind ebenfalls möglich.

Das Druckluftmodul 20 kann, je nach Anforderung, fahrzeugspezifisch aufgebaut sein. D. h., das Druckluftmodul 20 kann modular erweiterbar sein. Je nach Fahrzeugkonfiguration des Nutzfahrzeugs 10 besteht das Druckluftmodul 20 aus unterschiedlichen Komponenten (Bauteilvarianz und Komplexität). Das Druckluftmodul 20 kann zu einem frühen Montagestadium gebildet werden, ohne am Endmontageort die Teilevielfalt zu erhöhen. Um die Funktionen bei unterschiedlichen Fahrzeugtypen abzubilden, wird eine Basisausführung des Druckluftmoduls 20 jeweils modular mit einer oder mehreren Erweiterungen ergänzt, wenn gewünscht. Diese Erweiterungen bilden die Zusatzanforderungen für den entsprechenden Fahrzeugtyp ab.

Eine Basisausführung des Druckluftmoduls 20 kann z. B. den Luftkompressor 26, die Druckluftaufbereitung 28, den Druckluftspeicher 30, mindestens eine Druckluft-Bremsventilvorrichtung, z. B. 32 oder 34, und die Haltevorrichtung 36 aufweisen. Die Druckluftkomponenten 26, 28, 30, 32, 34 können an eigens dafür vorgesehenen, vorbestimmten Anbringungsbereichen 38 der Haltevorrichtung 36 angebracht sein. Die Basisausführung kann bspw. auch noch die Druckluft-Luftfederungsventileinheit 42 und/oder die Regenerationsvorrichtung 44 aufweisen.

Fahrzeugspezifische modulare Erweiterungen des Druckluftmoduls 20 können dann so vorgenommen werden, dass zusätzliche Druckluftkomponenten an weiteren, eigens dafür vorgesehenen, vorbestimmen Anbringungsbereichen, z. B. beim Bezugszeichen 46, angebracht werden können. Zusätzliche Druckluftkomponenten können bspw. eine funktionale Erweiterung zur Druckluftsteuerung eines Druckluft-Anhängerbremssystems und/oder ein funktionale Erweiterung zur Druckluftsteuerung einer Druckluft-Betriebs- und/oder-Feststellbremse oder eines Liftzylinders einer Vor-oder Nachlaufachse des Nutzfahrzeugs 10 sein. Eine Vorlaufachse ist in Vorwärtsfahrtrichtung vor der Hinterachse 18 angeordnet, eine Nachlaufachse dahinter.

In diesen erweiterten Ausführungen kann das Druckluftmodul 20 bspw. zusätzlich eine Druckluft-Anhängerbremssteuerventileinheit, die einem Druckluft-Anhängerbremssystem zugeordnet und an der Haltevorrichtung 36 getragen ist, und/oder einen oder mehrere weitere Druckluftspeicher, der oder die an der Haltevorrichtung getragen ist oder sind, aufweisen.

Das Druckluftmodul 20 kann ferner eigenständig prüfbar sein, d. h. unabhängig von einer Montage an den Rahmen 12 und einer Anbindung an die Druckluftsysteme des Nutzfahrzeugs. Damit kann bereits vor Montage des Druckluftmoduls 20 eine Funktionsfähigkeit getestet werden. Dies gewährleistet den geforderten Qualitätsstandard in der Fahrzeugendmontage. Die Funktionsfähigkeit kann insbesondere hinsichtlich einer elektrischen Funktionsfähigkeit und einer pneumatischen Funktionsfähigkeit des Druckluftmoduls erfolgen. Die Prüfung kann bspw. an den Schnittstellen 20A und 20B erfolgen. Die Schnittstellen 20A und 20B können somit als externe Prüfanschlüsse dienen. Es können auch zusätzliche oder alternative elektrische oder pneumatische externe Prüfanschlüsse am Druckluftmodul 20 umfasst sein. Für die Funktionsprüfung können bspw. auch noch pneumatische Befüllanschlüsse am Druckluftmodul 20 umfasst sein.

Das Druckluftmodul 20 kann an unterschiedlichen Herstellorten, durch einen Systemlieferanten oder an einem spezialisierten Werksstandort gefertigt werden. Dies erleichtert die Lokalisierung der Fahrzeugendmontage, da die notwendigen Qualitätskriterien als auch die Einfachheit der Montagesysteme erreicht werden. Das gesamte, fahrzeugspezifisch konfigurierte und vormontierte Druckluftmodul 20 kann nach erfolgreicher Funktionsprüfung über die standardisierten Halterungen 40 an das Nutzfahrzeug 10 montiert und mit den funktionalen Schnittstellen (elektrisch und pneumatisch) verbunden werden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die Merkmale des unabhängigen Anspruchs 1 unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Luftkompressors, des Druckluftspeichers, der Druckluftaufbereitung, der mindestens einen Druckluft-Bremsventileinheit und/oder der Haltevorrichtung des unabhängigen Anspruchs 1 offenbart.

### Bezugszeichenliste

- 10: Nutzfahrzeug
- 12: Rahmen
- 14: Aufbau
- 16: Vorderachse
- 18: Hinterachse
- 20: Druckluftmodul
- 20A: Elektrische und/oder elektronische Schnittstelle
- 20B: Pneumatische Schnittstelle
- 22: Druckluft-Bremssystem
- 24: Luftfederungssystem
- 26: Luftkompressor
- 28: Druckluftaufbereitung
- 30: Druckluftspeicher
- 32: Druckluft-Betriebsbremsventileinheit
- 34: Druckluft-Feststellbremsventileinheit
- 36: Haltevorrichtung
- 38: Anbringungsbereich
- 40: Halterung
- 42: Druckluft-Luftfederungsventileinheit
- 44: Regenerationsvorrichtung
- 46: Anbringungsbereich

## Patentansprüche

1. Druckluftmodul (20) zur Montage an einen Rahmen (12) eines Nutzfahrzeugs (10), aufweisend:
einen Luftkompressor (26) zum Verdichten von Luft;
einen Druckluftspeicher (30) zum Speichern von Druckluft;
eine Druckluftaufbereitung (28) zum Reinigen, Entfeuchten und/oder Kühlen von Druckluft;
mindestens eine Druckluft-Bremsventileinheit (32, 34), die einem Druckluft-Bremssystem (22) zugeordnet ist; und
eine Haltevorrichtung (36), die zur Montage an den Rahmen (12) ausgebildet ist und den Luftkompressor (26), den Druckluftspeicher (30), die Druckluftaufbereitung (28) und die mindestens eine Druckluft-Bremsventileinheit (32, 34) trägt.

2. Druckluftmodul (20) nach Anspruch 1, wobei:
die mindestens eine Druckluft-Bremsventileinheit (32, 34) ein Druckluft-Betriebsbremsventileinheit (32), die einem elektronisch geregelten Druckluft-Betriebsbremssystem (22) zugeordnet ist, und/oder eine Druckluft-Feststellbremsventileinheit (34), die einem elektrischen Druckluft-Feststellbremssystem (22) zugeordnet ist, aufweist.

3. Druckluftmodul (20) nach Anspruch 2, wobei:
die Druckluft-Betriebsbremsventileinheit (32) dazu ausgebildet ist, Bremsdrücke einer Vorderachse (16) des Nutzfahrzeugs (10) und/oder einer Hinterachse (18) des Nutzfahrzeugs (10) zu steuern; und/oder
die Druckluft-Betriebsbremsventileinheit (32) ein Proportionalventil, das einer Vorderachse (16) des Nutzfahrzeugs (10) zugeordnet ist, und/oder einen Hinterachsmodulator, der einer Hinterachse (18) des Nutzfahrzeugs (10) zugeordnet ist, aufweist; und/oder
die Druckluft-Feststellbremsventileinheit (34) dazu ausgebildet ist, eine Feststellbremse an einer Achse (16, 18) des Nutzfahrzeugs (10) zu steuern.

4. Druckluftmodul (20) nach einem der vorherigen Ansprüche, ferner aufweisend:
eine Druckluft-Luftfederungsventileinheit (42), die einem elektronisch geregelten Luftfederungssystem (24) zugeordnet und an der Haltevorrichtung (36) getragen ist.

5. Druckluftmodul (20) nach Anspruch 4, wobei:
die Druckluft-Luftfederungsventileinheit (42) dazu ausgebildet ist, einen Druck in dem elektronisch geregelten Luftfederungssystem (24) aufzubauen, zu halten und zu senken; und/oder
die Druckluft-Luftfederungsventileinheit (42) ein Vorderachsventil für eine luftgefederte Vorderachse (16) des Nutzfahrzeugs (10), ein Hinterachsventil für eine luftgefederte Hinterachse (18) des Nutzfahrzeugs (10) und/oder ein Hinterachs-Liftachsventil für eine luftgefederte Lifthinterachse des Nutzfahrzeugs (10) aufweist.

6. Druckluftmodul (20) nach einem der vorherigen Ansprüche, ferner aufweisend:
eine Regenerationsvorrichtung (44) zum Regenerieren der Druckluftaufbereitung (28), wobei die Regenerationsvorrichtung (44) zumindest teilweise an der Haltevorrichtung (36) getragen ist,
wobei vorzugsweise:
die Haltevorrichtung (36) zumindest abschnittsweise als ein abgedichtetes Hohlprofil ausgebildet ist; und
ein Druckluft-Regenerationsbehälter der Regenerationsvorrichtung (44) durch das abgedichtete Hohlprofil gebildet ist.

7. Druckluftmodul (20) nach einem der vorherigen Ansprüche, wobei:
das Druckluftmodul (20) zum Ermöglichen einer eigenständigen Funktionsprüfung vormontiert ist; und/oder
der Luftkompressor (26), der Druckluftspeicher (30), die Druckluftaufbereitung (28) und die mindestens eine Druckluft-Bremsventileinheit (32, 34) zum Ermöglichen einer eigenständigen Funktionsprüfung im Druckluftmodul (20) vormontiert sind.

8. Druckluftmodul (20) nach einem der vorherigen Ansprüche, wobei:
das Druckluftmodul (20) eigenständig prüffähig elektrisch verkabelt ist; und/oder
der Luftkompressor (26), die Druckluftaufbereitung (28) und die mindestens eine Druckluft-Bremsventileinheit (32, 34) eigenständig prüffähig in dem Druckluftmodul (20) elektrisch verkabelt sind; und/oder
das Druckluftmodul (20) mindestens eine elektrische oder elektronische Schnittstelle (20A) zur eigenständigen Prüfung der elektrischen und/oder elektronischen Funktionsfähigkeit des Druckluftmoduls (20) und/oder des Luftkompressors (26), der Druckluftaufbereitung (28) und der mindestens einen Druckluft-Bremsventileinheit (32, 34) aufweist.

9. Druckluftmodul (20) nach einem der vorherigen Ansprüche, wobei:
das Druckluftmodul (20) eigenständig prüffähig pneumatisch verrohrt ist; und/oder
der Luftkompressor (26), der Druckluftspeicher (30), die Druckluftaufbereitung (28) und die mindestens ein Druckluft-Bremsventileinheit (32, 34) eigenständig prüffähig in dem Druckluftmodul (20) pneumatisch verrohrt sind; und/oder
das Druckluftmodul (20) mindestens eine pneumatische Schnittstelle (20B) zur eigenständigen Prüfung der pneumatischen Funktionsfähigkeit des Druckluftmoduls (20) und/oder des Luftkompressors (26), des Druckluftspeichers (30), der Druckluftaufbereitung (28) und der mindestens einen Druckluft-Bremsventileinheit (32, 34) aufweist.

10. Druckluftmodul (20) nach einem der vorherigen Ansprüche, wobei:
das Druckluftmodul (20) dazu ausgebildet ist, wahlweise modular mindestens eine weitere Druckluftkomponente, vorzugsweise mehrere weitere Druckluftkomponenten, aufzunehmen; und/oder
das Druckluftmodul (20) eine modular um weitere Druckluftkomponenten erweiterbare Basisausführung aufweist; und/oder
die Haltevorrichtung (36) mindestens einen vorbestimmten Anbringungsbereich (46) aufweist, der zur wahlweisen Aufnahme mindestens einer weiteren Druckluftkomponente zur modularen Erweiterung des Druckluftmoduls (20) ausgebildet ist.

11. Druckluftmodul (20) nach Anspruch 10, wobei die mindestens eine weitere Druckluftkomponente aufweist:
eine Druckluft-Anhängerbremssteuerventileinheit und/oder einen weiteren Druckluftspeicher, die oder der einem Druckluft-Anhängerbremssystem zugeordnet ist; und/oder
eine Druckluft-Bremsventileinheit und/oder einen weiteren Druckluftspeicher, die oder der einer Vor- oder Nachlaufachse des Nutzfahrzeugs (10) zugeordnet ist.

12. Druckluftmodul (20) nach einem der vorherigen Ansprüche, wobei:
die Haltevorrichtung (36) als ein offenes Gestell ausgeführt ist; und/oder
der Druckluftspeicher (30) außen an der Haltevorrichtung (36) angebracht ist, und/oder
der Druckluftspeicher (30) außen an der Haltevorrichtung (36) an einer Seite der Haltevorrichtung (36), die zur Montage an den Rahmen (12) ausgebildet ist; angebracht ist; und/oder
der Luftkompressor (26), die Druckluftaufbereitung (28) und/oder die Druckluft-Betriebsbremsventileinheit (32) innen an der Haltevorrichtung (36) angebracht ist; und/oder
die Druckluft-Luftfederungsventileinheit und/oder die Druckluft-Feststellbremsventileinheit (34) außen an der Haltevorrichtung (36) und/oder oberhalb des Luftkompressors (26) angebracht ist.

13. Druckluftmodul (20) nach einem der vorherigen Ansprüche, wobei:
der Luftkompressor (26) elektrisch angetrieben ist; und/oder
die mindestens eine Druckluft-Bremsventileinheit (32, 34) und/oder die Druckluft-Luftfederungsventileinheit elektrisch betätigt und/oder als Magnetventileinheit ausgebildet ist; und/oder
die Druckluftaufbereitung (28) einen Partikelfilter, einen Luftkühler und/oder einen Luftentfeuchter aufweist.

14. Nutzfahrzeug (10), vorzugsweise Lastkraftwagen oder Omnibus, mit einem Druckluftmodul (20) nach einem der vorherigen Ansprüche, vorzugsweise rahmenfest montiert, vorzugsweise benachbart zu einer Hinterachse (18) des Nutzfahrzeugs (10).

15. Verfahren zur Funktionsprüfung eines Druckluftmoduls (20) nach einem der Ansprüche 1 bis 13, aufweisend:
Vormontieren des Druckluftmoduls (20) zu einer eigenständig, vorzugsweise elektrisch oder pneumatisch, prüfbaren Einheit; und
Funktionales, vorzugsweise elektrisches oder pneumatisches, Prüfen des vormontierten Druckluftmoduls (20) vor der Montage an den Rahmen (12) des Nutzfahrzeugs (10).

## Claims

1. A compressed air module (20) for mounting on a frame (12) of a commercial vehicle (10), having:
an air compressor (26) for compressing air;
a compressed air store (30) for storing compressed air;
a compressed air conditioning means (28) for cleaning, dehumidifying and/or cooling compressed air;
at least one compressed-air brake valve unit (32, 34) which is assigned to a compressed-air brake system (22); and
a holding device (36) which is designed for mounting on the frame (12) and carries the air compressor (26), the compressed air store (30), the compressed-air conditioning means (28) and the at least one compressed-air brake valve unit (32, 34).

2. The compressed air module (20) according to Claim 1, wherein:
the at least one compressed-air brake valve unit (32, 34) has a compressed-air service brake valve unit (32), which is assigned to an electronically regulated compressed-air service brake system (22), and/or a compressed-air parking brake valve unit (34), which is assigned to an electrical compressed-air parking brake system (22).

3. The compressed air module (20) according to Claim 2, wherein:
the compressed-air service brake valve unit (32) is designed to control brake pressures of a front axle (16) of the commercial vehicle (10) and/or of a rear axle (18) of the commercial vehicle (10); and/or
the compressed-air service brake valve unit (32) has a proportional valve, which is assigned to a front axle (16) of the commercial vehicle (10), and/or a rear axle modulator, which is assigned to a rear axle (18) of the commercial vehicle (10); and/or
the compressed-air parking brake valve unit (34) is designed to control a parking brake at an axle (16, 18) of the commercial vehicle (10).

4. The compressed air module (20) according to one of the preceding claims, furthermore having:
a compressed-air air suspension valve unit (42) which is assigned to an electronically regulated air suspension system (24) and is carried at the holding device (36).

5. The compressed air module (20) according to Claim 4, wherein:
the compressed-air air suspension valve unit (42) is designed to build up, to hold and to lower a pressure in the electronically regulated air suspension system (24); and/or
the compressed-air air suspension valve unit (42) has a front axle valve for an air-sprung front axle (16) of the commercial vehicle (10), a rear axle valve for an air-sprung rear axle (18) of the commercial vehicle (10) and/or a rear-axle lift axle valve for an air-sprung lift rear axle of the commercial vehicle (10).

6. The compressed air module (20) according to one of the preceding claims, furthermore having:
a regeneration device (44) for regenerating the compressed air conditioning means (28), wherein the regeneration device (44) is at least partially carried at the holding device (36),
wherein preferably:
the holding device (36) is designed at least in sections as a sealed hollow profile; and
a compressed-air regeneration container of the regeneration device (44) is formed by the sealed hollow profile.

7. The compressed air module (20) according to one of the preceding claims, wherein:
the compressed air module (20) is preassembled in order to permit independent functional testing; and/or
the air compressor (26), the compressed air store (30), the compressed air conditioning means (28) and the at least one compressed-air brake valve unit (32, 34) are preassembled in order to permit independent functional testing in the compressed air module (20).

8. The compressed air module (20) according to one of the preceding claims, wherein:
the compressed air module (20) is electrically wired in an independently testable manner; and/or
the air compressor (26), the compressed air conditioning means (28) and the at least one compressed-air brake valve unit (32, 34) are electrically wired in an independently testable manner in the compressed air module (20); and/or
the compressed air module (20) has at least one electric or electronic interface (20A) for independently testing the electrical and/or electronic functional capability of the compressed air module (20) and/or the air compressor (26), the compressed air conditioning means (28) and the at least one compressed-air brake valve unit (32, 34).

9. The compressed air module (20) according to one of the preceding claims, wherein:
the compressed air module (20) has pneumatic pipe connections in an independently testable manner; and/or
the air compressor (26), the compressed air store (30), the compressed air conditioning means (28) and the at least one compressed-air brake valve unit (32, 34) have pneumatic pipe connections in an independently testable manner in the compressed air module (20); and/or
the compressed air module (20) has at least one pneumatic interface (20B) for independently testing the pneumatic functional capability of the compressed air module (20) and/or the air compressor (26), the compressed air store (30), the compressed air conditioning means (28) and the at least one compressed-air brake valve unit (32, 34).

10. The compressed air module (20) according to one of the preceding claims, wherein:
the compressed air module (20) is designed to selectively modularly accommodate at least one further compressed air component, preferably a plurality of further compressed air components; and/or
the compressed air module (20) has a basic design which can be extended modularly by further compressed air components; and/or
the holding device (36) has at least one predetermined attachment region (46) which is designed for optionally accommodating at least one further compressed air component for modularly extending the compressed air module (20).

11. The compressed air module (20) according to Claim 10, wherein the at least one further compressed air component has:
a compressed-air trailer brake control valve unit and/or a further compressed air store, which compressed-air trailer brake control valve unit or compressed air store is assigned to a compressed-air trailer brake system; and/or
a compressed-air brake valve unit and/or a further compressed air store, which compressed-air brake valve unit or compressed air store is assigned to a leading or trailing axle of the commercial vehicle (10).

12. The compressed air module (20) according to one of the preceding claims, wherein:
the holding device (36) is designed as an open framework; and/or
the compressed air store (30) is attached to the outer side of the holding device (36), and/or
the compressed air store (30) is attached to the outer side of the holding device (36) on a side of the holding device (36) that is designed for mounting on the frame (12); and/or
the air compressor (26), the compressed air conditioning means (28) and/or the compressed-air service brake valve unit (32) is/are attached to the inner side of the holding device (36); and/or
the compressed-air air suspension valve unit and/or the compressed-air parking brake valve unit (34) is/are attached to the outer side of the holding device (36) and/or above the air compressor (26).

13. The compressed air module (20) according to one of the preceding claims, wherein:
the air compressor (26) is driven electrically; and/or
the at least one compressed-air brake valve unit (32, 34) and/or the compressed-air air suspension valve unit is/are electrically actuated and/or designed as a solenoid valve unit; and/or
the compressed air conditioning means (28) has a particle filter, an air cooler and/or an air dehumidifier.

14. A commercial vehicle (10), preferably lorry or bus, with a compressed air module (20) according to one of the preceding claims, preferably mounted fixedly on the frame, preferably adjacent to a rear axle (18) of the commercial vehicle (10).

15. A method for functional testing of a compressed air module (20) according to one of Claims 1 to 13, comprising:
preassembling the compressed air module (20) to form a unit which can be tested independently, preferably electrically or pneumatically; and
functionally, preferably electrically or pneumatically, testing the preassembled compressed air module (20) prior to mounting on the frame (12) of the commercial vehicle (10).

## Revendications

1. Module à air comprimé (20) destiné à être monté sur un châssis (12) d'un véhicule utilitaire (10), présentant :
un compresseur d'air (26) servant à comprimer l'air ;
un réservoir d'air comprimé (30) servant à stocker l'air comprimé ;
un dispositif de traitement d'air comprimé (28) servant à purifier, déshumidifier et/ou refroidir l'air comprimé ;
au moins une unité de valve de frein à air comprimé (32, 34) qui est associée à un système de freinage à air comprimé (22) ; et
un dispositif porteur (36) qui est réalisé pour être monté sur le châssis (12) et supporte le compresseur d'air (26), le réservoir d'air comprimé (30), le dispositif de traitement d'air comprimé (28) et ladite au moins une unité de valve de frein à air comprimé (32, 34).

2. Module à air comprimé (20) selon la revendication 1, dans lequel :
ladite au moins une unité de valve de frein à air comprimé (32, 34) présente une unité de valve de frein de service à air comprimé (32) qui est associée à un système de frein de service à air comprimé (22) à régulation électronique, et/ou une unité de valve de frein de stationnement à air comprimé (34) qui est associée à un système de frein de stationnement à air comprimé (22) électrique.

3. Module à air comprimé (20) selon la revendication 2, dans lequel :
l'unité de valve de frein de service à air comprimé (32) est réalisée pour commander des pressions de freinage d'un essieu avant (16) du véhicule utilitaire (10) et/ou d'un essieu arrière (18) du véhicule utilitaire (10) ; et/ou
l'unité de valve de frein de service à air comprimé (32) présente une valve proportionnelle qui est associée à un essieu avant (16) du véhicule utilitaire (10), et/ou un modulateur d'essieu arrière qui est associé à un essieu arrière (18) du véhicule utilitaire (10) ; et/ou
l'unité de valve de frein de stationnement à air comprimé (34) est réalisée pour commander un frein de stationnement sur un essieu (16, 18) du véhicule utilitaire (10).

4. Module à air comprimé (20) selon l'une quelconque des revendications précédentes, présentant en outre :
une unité de valve de suspension pneumatique à air comprimé (42) qui est associée à un système de suspension pneumatique (24) à régulation électronique et est supportée par le dispositif porteur (36).

5. Module à air comprimé (20) selon la revendication 4, dans lequel :
l'unité de valve de suspension pneumatique à air comprimé (42) est réalisée pour établir, maintenir et réduire une pression dans le système de suspension pneumatique (24) à régulation électronique ; et/ou
l'unité de valve de suspension pneumatique à air comprimé (42) présente une valve d'essieu avant pour un essieu avant à suspension pneumatique (16) du véhicule utilitaire (10), une valve d'essieu arrière pour un essieu arrière à suspension pneumatique (18) du véhicule utilitaire (10) et/ou une valve d'essieu arrière relevable pour un essieu arrière relevable à suspension pneumatique du véhicule utilitaire (10).

6. Module à air comprimé (20) selon l'une quelconque des revendications précédentes, présentant en outre :
un dispositif de régénération (44) servant à régénérer le dispositif de traitement d'air comprimé (28), le dispositif de régénération (44) étant supporté au moins partiellement par le dispositif porteur (36),
dans lequel de préférence :
le dispositif porteur (36) est réalisé au moins par endroits sous la forme d'un profilé creux étanche ; et
un récipient de régénération d'air comprimé du dispositif de régénération (44) est formé par le profilé creux étanche.

7. Module à air comprimé (20) selon l'une quelconque des revendications précédentes, dans lequel :
le module à air comprimé (20) est prémonté afin de permettre un test de fonctionnement autonome ; et/ou
le compresseur d'air (26), le réservoir d'air comprimé (30), le dispositif de traitement d'air comprimé (28) et ladite au moins une unité de valve de frein à air comprimé (32, 34) sont prémontés dans le module à air comprimé (20) afin de permettre un test de fonctionnement autonome.

8. Module à air comprimé (20) selon l'une quelconque des revendications précédentes, dans lequel :
le module à air comprimé (20) est câblé électriquement de manière à permettre un test autonome ; et/ou
le compresseur d'air (26), le dispositif de traitement d'air comprimé (28) et ladite au moins une unité de valve de frein à air comprimé (32, 34) sont câblés électriquement dans le module à air comprimé (20) de manière à permettre un test autonome ; et/ou
le module à air comprimé (20) présente au moins une interface électrique ou électronique (20A) pour le test autonome de la fonctionnalité électrique et/ou électronique du module à air comprimé (20) et/ou du compresseur d'air (26), du dispositif de traitement d'air comprimé (28) et de ladite au moins une unité de valve de frein à air comprimé (32, 34).

9. Module à air comprimé (20) selon l'une quelconque des revendications précédentes, dans lequel:
le module à air comprimé (20) est raccordé pneumatiquement de manière à permettre un test autonome ; et/ou
le compresseur d'air (26), le réservoir d'air comprimé (30), le dispositif de traitement d'air comprimé (28) et ladite au moins une unité de valve de frein à air comprimé (32, 34) sont raccordés pneumatiquement dans le module à air comprimé (20) de manière à permettre un test autonome ; et/ou
le module à air comprimé (20) présente au moins une interface pneumatique (20B) destinée à un test autonome de la fonctionnalité pneumatique du module à air comprimé (20) et/ou du compresseur d'air (26), du réservoir d'air comprimé (30), du dispositif de traitement d'air comprimé (28) et de ladite au moins une unité de valve de frein à air comprimé (32, 34).

10. Module à air comprimé (20) selon l'une quelconque des revendications précédentes, dans lequel :
le module à air comprimé (20) est réalisé pour recevoir au choix de manière modulaire au moins un autre composant à air comprimé, de préférence plusieurs autres composants à air comprimé ; et/ou
le module à air comprimé (20) présente une version de base extensible de façon modulaire par d'autres composants à air comprimé ; et/ou
le dispositif porteur (36) présente au moins une zone de fixation prédéterminée (46) qui est réalisée pour recevoir au choix au moins un autre composant à air comprimé pour l'extension modulaire du module à air comprimé (20).

11. Module à air comprimé (20) selon la revendication 10, dans lequel ledit au moins un autre composant à air comprimé présente :
une unité de valve de commande de frein de remorque à air comprimé et/ou un autre réservoir d'air comprimé qui est associé(e) à un système de freinage de remorque à air comprimé ; et/ou
une unité de valve de frein à air comprimé et/ou un autre réservoir d'air comprimé qui est associé(e) à un essieu poussé ou un essieu suiveur du véhicule utilitaire (10).

12. Module à air comprimé (20) selon l'une quelconque des revendications précédentes, dans lequel :
le dispositif porteur (36) est réalisé sous la forme d'un bâti ouvert ; et/ou
le réservoir d'air comprimé (30) est fixé au dispositif porteur (36) à l'extérieur, et/ou
le réservoir d'air comprimé (30) est fixé au dispositif porteur (36) à l'extérieur sur une face du dispositif porteur (36) qui est réalisée pour le montage sur le châssis (12) ; et/ou
le compresseur d'air (26), le dispositif de traitement d'air comprimé (28) et/ou l'unité de valve de frein de service à air comprimé (32) sont fixés au dispositif porteur (36) à l'intérieur ; et/ou
l'unité de valve de suspension pneumatique à air comprimé et/ou l'unité de valve de frein de stationnement à air comprimé (34) sont fixées au dispositif porteur (36) à l'extérieur et/ou au-dessus du compresseur d'air (26).

13. Module à air comprimé (20) selon l'une quelconque des revendications précédentes, dans lequel :
le compresseur d'air (26) est à entraînement électrique ; et/ou
ladite au moins une unité de valve de frein à air comprimé (32, 34) et/ou l'unité de valve de suspension pneumatique à air comprimé sont actionnées électriquement et/ou sont réalisées sous la forme d'une unité d'électrovalve ; et/ou
le dispositif de traitement d'air comprimé (28) présente un filtre à particules, un refroidisseur à air et/ou un déshumidificateur d'air.

14. Véhicule utilitaire (10), de préférence poids lourd ou bus, comprenant un module à air comprimé (20) selon l'une quelconque des revendications précédentes, de préférence monté de manière solidaire du châssis, de préférence de manière adjacente à un essieu arrière (18) du véhicule utilitaire (10).

15. Procédé de test de fonctionnement d'un module à air comprimé (20) selon l'une quelconque des revendications 1 à 13, présentant les étapes consistant à :
prémonter le module à air comprimé (20) en une unité permettant un test autonome, de préférence électrique ou pneumatique ; et
effectuer un test fonctionnel, de préférence électrique ou pneumatique, du module à air comprimé (20) prémonté avant le montage sur le châssis (12) du véhicule utilitaire (10).
